Europäisches Patentamt

European Patent Office

Office européen des brevets

(11) Numéro de publication : **0 072 280**
**B1**

(19)

(11) Numéro de publication : **0 072 280 B1**

## (12) FASCICULE DE BREVET EUROPÉEN

(45) Date de publication du fascicule du brevet :
13.03.85

(51) Int. Cl.⁴ : **B 23 G   5/06**

(21) Numéro de dépôt : **82401354.4**

(22) Date de dépôt : **21.07.82**

(54) **Taraud pour taraudages de grande précision.**

(30) Priorité : **24.07.81 FR 8114396**
**15.10.81 FR 8119421**

(43) Date de publication de la demande :
**16.02.83 Bulletin 83/07**

(45) Mention de la délivrance du brevet :
**13.03.85 Bulletin 85/11**

(84) Etats contractants désignés :
**AT BE CH DE FR GB IT LI SE**

(56) Documents cités :
**DE-A- 2 058 991**
**DE-C-   651 637**
**DE-C-   715 580**
**FR-A-   927 044**
**US-A- 2 975 441**

(73) Titulaire : **CREUSOT-LOIRE**
**42 rue d'Anjou**
**F-75008 Paris (FR)**

(72) Inventeur : **Fostier, Patrick**
**176 Résidence du Lac Torcy**
**F-71210 Montchanin (FR)**
Inventeur : **Gdula, Bernard**
**183 Résidence du Lac Torcy**
**F-71210 Montchanin (FR)**

(74) Mandataire : **Le Brusque, Maurice et al**
**CREUSOT-LOIRE 15 rue Pasquier**
**F-75383 Paris Cedex 08 (FR)**

## Description

L'invention se situe dans le domaine des taraudages devant satisfaire à des exigences très sévères tant sur le plan de la précision des cotes que sur le plan de la qualité de l'état de surface. Elle s'applique en particulier à tous les taraudages difficiles à effectuer, soit en raison de la grande longueur ou du gros diamètre du trou à tarauder, soit en raison du matériau, qui peut être difficile à usiner, soit en raison des tolérances géométriques et dimensionnelles de la pièce.

Lorsqu'on réalise une pièce de dimension importante ou une pièce devant satisfaire à des exigences de précision très sévères ou encore une pièce effectuée dans un matériau coûteux, on doit veiller à ce que les opérations d'usinage soient exécutées de la façon la plus parfaite possible, avec le minimum de retouches, celles-ci pouvant entraîner un coût de réparation élevé ou, ce qui est pire, une mise au rebut de la pièce. Ceci s'applique en particulier aux opérations de taraudages, qui sont en général effectuées à la fin de l'usinage de la pièce, c'est-à-dire au moment où le prix de revient de la pièce est le plus élevé.

On utilise couramment des tarauds fonctionnant par enlèvement de matière, avec évacuation des copeaux vers l'intérieur du taraud (taraud du type « cloche ») ou vers l'avant (par exemple tarauds de type « cuillère » ou de type « coupe gun ») ou fonctionnant par déformation de matière (tarauds à refouler). Tous ces types de tarauds sont bien connus de l'homme du métier. A titre d'exemple, on peut citer le brevet américain US-A-2 975 441 qui décrit un taraud classique du type cloche et la demande de brevet allemand DE-A-2 058 991 qui décrit un outil constitué d'un taraud à refouler de type classique, repéré par 14, précédé d'une partie coupante destinée uniquement à « préparer » le trou à tarauder en portant les cotes de celui-ci dans les tolérances exigées.

Avec les tarauds précités, on travaille souvent sans qu'aucune retouche ne soit nécessaire, mais il arrive parfois que le taraudage effectué ne soit pas convenable et nécessite soit la mise au rebut d'une pièce, soit une retouche par un nouveau taraudage effectué au moyen d'un taraud de plus grande précision ou par réalésage et nouveau taraudage sur un plus grand diamètre, cette dernière opération étant bien sûr plus difficile que le premier taraudage, ce qui accroît encore les risques de mise au rebut de la pièce. En outre on a remarqué que le nombre de taraudages effectués avec un même taraud, sans retouche du taraud, était relativement limité car le taraud s'usait assez rapidement.

La présente invention remédie à ces inconvénients. Elle a pour objet un taraud de grande fiabilité dont la longévité soit accrue, qui permette d'une part d'obtenir une pièce convenable en une seule passe et d'autre part de pouvoir effectuer un nombre accru de taraudages avec un même outil, sans retouche de l'outil.

Plus précisément, l'invention concerne un taraud du type à enlèvement de matière, composé d'une partie conique coupante détalonnée sur flancs de filets et éventuellement sur sommets, munie de goujures pour chasser les copeaux vers l'avant ou à l'intérieur du taraud, et prolongée par une partie arrière cylindrique ou très légèrement conique, de conicité inverse à celle de la partie conique coupante, filetée au diamètre nominal et au profil du trou définitif.

Selon l'invention, ladite partie arrière présente un profil constitué d'une alternance de secteurs de deux types, les flancs de filets des secteurs du premier type étant au profil du trou définitif et les flancs de filets des secteurs du deuxième type étant détalonnés par rapport au profil du trou définitif.

Les secteurs du deuxième type peuvent en outre être tels que les sommets de leurs filets soient aussi détalonnés par rapport au diamètre nominal du trou définitif.

Dans un mode préféré de réalisation de l'invention, les secteurs du premier type se situent en face des goujures de la partie conique coupante et les secteurs du deuxième type se situent en face des parties pleines de cette partie coupante.

De préférence, ladite partie arrière comporte des goujures de lubrification sur une partie de sa longueur, opposée à la partie conique coupante.

Mais la présente invention sera mieux comprise à la lecture de la description détaillée qui va suivre d'un mode de réalisation de l'invention, appliqué à deux types différents de tarauds, en référence aux dessins annexés.

La figure 1 représente, en perspective, un taraud de type cloche réalisé selon l'invention.

La figure 2 représente une coupe longitudinale du taraud de la figure 1, effectuée au niveau d'une des goujures de la partie conique coupante.

La figure 3 est une figure analogue à la figure 2, mais effectuée au niveau d'une des parties pleines de cette partie conique.

La figure 4 représente une coupe du taraud de la figure 1 par un plan perpendiculaire à l'axe du taraud effectuée au niveau de la partie arrière (dans la portion non munie de goujures).

La figure 5 représente un détail de la figure 4.

La figure 6 représente en perspective un taraud du type dans lequel les copeaux sont évacués vers l'avant, réalisé selon l'invention.

La figure 7 est une figure analogue à la figure 4, mais correspondant au taraud de la figure 6.

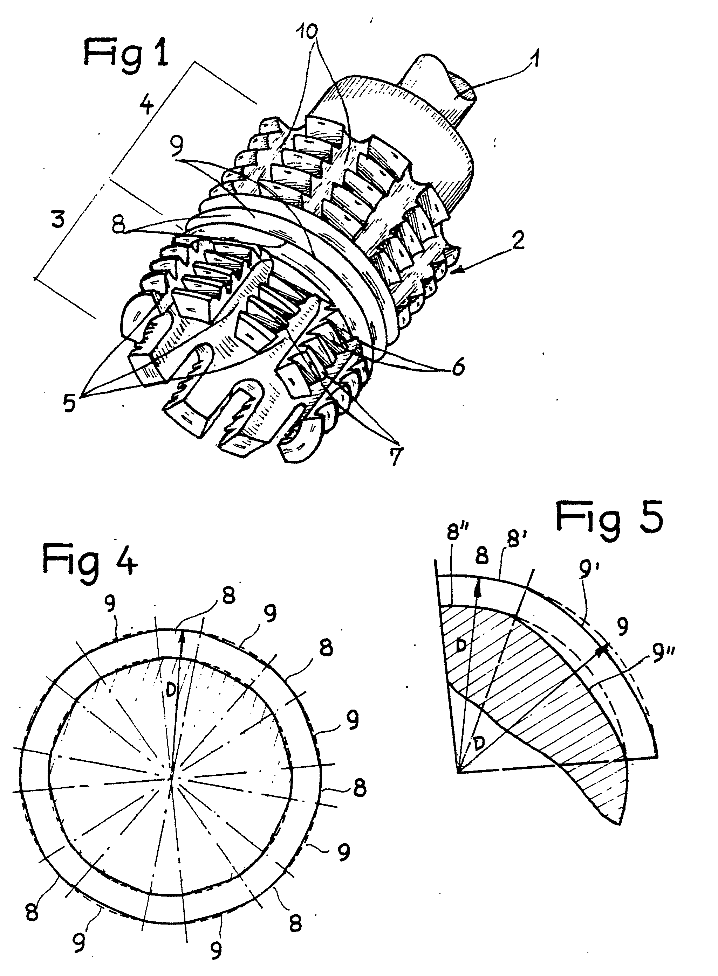

On se reportera tout d'abord à la figure 1. Cette figure représente un taraud du type cloche constitué d'une queue 1 et d'une partie utile 2 constituant le taraud proprement dit. La partie utile 2 comporte une partie conique coupante 3, semblable aux parties coupantes des tarauds de type cloche connus. Elle comporte des goujures 5 par lesquelles les copeaux sont chassés à l'intérieur du taraud. Les goujures 5 alternent avec des parties pleines 5'. De façon classique, les flancs de filets 6 et éventuellement les sommets de filets 7 de la partie coupante 3 sont détalonnés pour réduire les frottements pendant la coupe.

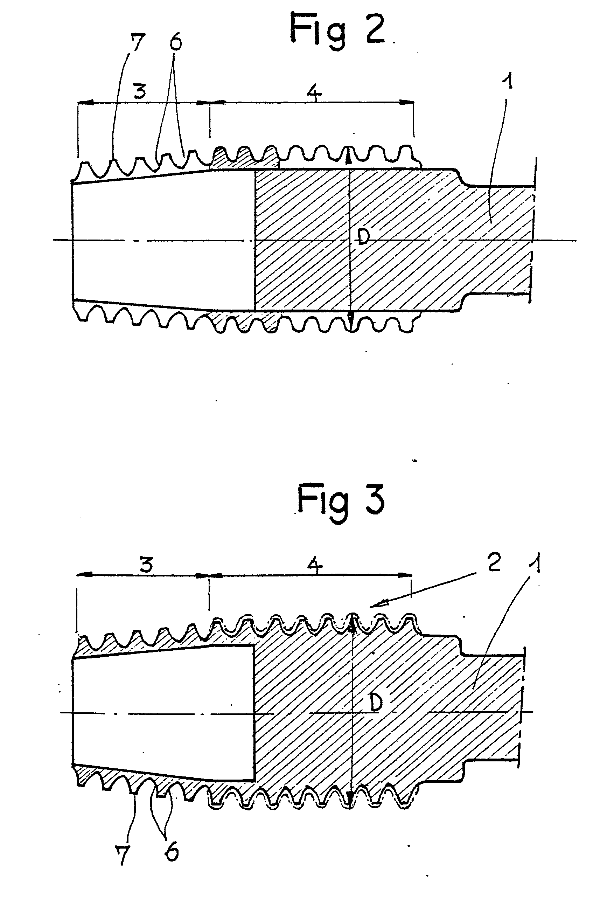

La partie coupante 3 est prolongée par une partie arrière 4 cylindrique ou très légèrement conique, de conicité inverse à celle de la partie conique coupante 3 (de façon connue, on choisit de réaliser la partie 4 cylindrique pour usiner des matériaux à faible élasticité ou faible copeau minimum alors qu'on préfère réaliser la partie 4 légèrement conique pour des matériaux à plus forte élasticité ou à copeau minimum plus important. Cette partie 4 est filetée au diamètre nominal et au profil du trou définitif (dans le cas où la partie 4 est très légèrement conique, cette conicité pouvant par exemple être de l'ordre de quelques pour 1 000, les filets de la partie arrière 4 sont quand même tous à la cote du diamètre nominal, compte tenu de la tolérance sur cette cote). La partie 4 peut se diviser en plusieurs secteurs de deux types alternés : des secteurs 8 dans lesquels les flancs de filets sont au profil du trou définitif et les secteurs 9 dans lesquels les flancs de filets sont détalonnés par rapport à ce profil. On se reportera aux figures 2 et 3 qui montrent respectivement une coupe au niveau d'un secteur 8 et une coupe au niveau d'un secteur 9.

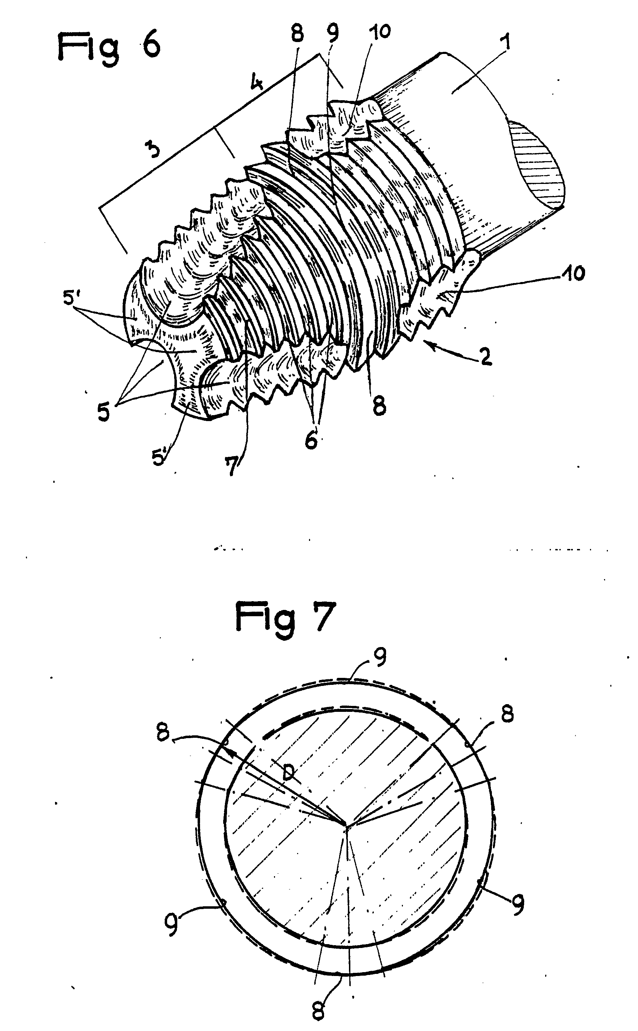

En outre, le détalonnage des flancs de filets peut être d'une valeur telle que les sommets de filets des secteurs 9 subissent, eux aussi, un détalonnage par rapport au diamètre nominal D du trou définitif. Cette caractéristique apparaît clairement sur les figures 4 et 5. Sur ces figures les sommets de filets 8' des secteurs 8 sont au diamètre nominal D du trou définitif et les sommets de filets 9' des secteurs 9 sont détalonnés par rapport à ce diamètre nominal D.

Sur les figures 4 et 5 les fonds de filets 9" des secteurs 9 ont aussi été détalonnés, de sorte que le profil des fonds de filets constitue une figure semblable à celle des sommets de filets. Cette caractéristique n'est pas indispensable au bon fonctionnement du taraud selon l'invention ; toutefois, lorsqu'on détalonne les flancs et les sommets des filets, les fonds de filets se trouvent en général aussi détalonnés.

Bien que le profil particulier donné à la partie arrière 4 par l'alternance des secteurs 8 et 9 soit difficile à distinguer sur une vue en perspective comme la figure 1, on a tout de même indiqué sur cette figure les secteurs 8 et 9. On remarquera que, dans ce mode particulier de réalisation de l'invention, les secteurs 8 sont situés dans le prolongement des goujures 5 de la partie coupante 3, les secteurs 9 étant situés en face des parties pleines de cette partie coupante. Cette disposition facilite la fabrication du taraud. Toutefois, il est bien évident que, lors des réaffûtages successifs du taraud, les goujures 5 s'élargiront et les secteurs 9 se trouveront en partie en face des parties pleines et en partie en face des goujures 5.

On voit également sur la figure 1 que la partie arrière 4 comporte des goujures 10 sur une partie de sa longueur, opposée à la partie conique coupante 3. Ces goujures 10 permettent une meilleure lubrification entre pièce et taraud, notamment au détaraudage. Ces goujures peuvent s'avérer très utiles pour des taraudages longs ou très délicats.

On se reportera maintenant à la figure 6 qui représente, de façon analogue à la figure 1, un autre type de taraud auquel s'applique l'invention. Sur cette figure, ainsi que sur la figure 7, les éléments correspondant à des éléments analogues des figures 1 ou 4 portent les mêmes repères.

Le taraud de la figure 7 comporte une partie conique coupante 3 munie de goujures 5 dont le profil est tel que les copeaux soient chassés vers l'avant du taraud. Ce type de tarauds permet donc d'effectuer des taraudages dans des trous débouchants ou possédant des avant-trous suffisamment longs. Plus précisément, le taraud représenté sur la figure 7 est un taraud de type « cuillère ». Comme pour le taraud de la figure 1, la partie arrière 4 peut se diviser en secteurs de deux types 8 et 9 alternés : des secteurs 8 dans lesquels les flancs de filets sont au profil du trou définitif et des secteurs 9 dans lesquels les flancs de filets sont détalonnés par rapport à ce profil.

En outre les sommets des filets des secteurs 9 peuvent être détalonnés par rapport au diamètre nominal D du trou définitif, comme on peut le voir sur la figure 7. De même les fonds de filets peuvent être détalonnés, de la même façon que le taraud de la figure 1.

Bien entendu, l'invention ne se limite pas au mode de réalisation qui vient d'être décrit ; elle en comporte au contraire toutes les variantes et l'on peut modifier les points de détail sans pour autant sortir du cadre de l'invention.

Ainsi, en ce qui concerne les tarauds pour trous débouchants, l'invention peut s'appliquer non seulement aux tarauds de type cuillère mais elle peut aussi s'appliquer aux tarauds à hélice inversée à l'avant, encore appelés tarauds du type coupe « gun ». Dans ce cas, seule la partie conique coupante 3 change, la partie arrière 4 à laquelle s'applique l'invention restant inchangée.

En outre la partie arrière 4 peut ne pas comporter de goujures 10 de lubrification.

## Revendications

1. Taraud composé d'une partie conique coupante (3) détalonnée sur flancs de filets (6) et éventuellement sur sommets (7), munie de goujures (5) pour chasser les copeaux vers l'avant ou à l'intérieur du taraud, et prolongée par une partie arrière (4) cylindrique ou très légèrement conique, de conicité inverse à celle de la partie conique coupante (3), filetée au diamètre nominal D et au profil du trou définitif, caractérisé par le fait que ladite partie arrière (4) présente un profil constitué d'une alternance de secteurs de deux types (8) et (9), les flancs de filets des secteurs (8) étant au profil du trou définitif et les flancs de filets des secteurs (9) étant détalonnés par rapport au profil du trou définitif.

2. Taraud selon la revendication 1, caractérisé par le fait que les secteurs de deux types (8) et (9) sont tels que les sommets des filets des secteurs (8) sont au diamètre nominal D du trou définitif et les sommets des filets des secteurs (9) sont détalonnés par rapport au diamètre nominal D du trou définitif.

3. Taraud selon l'une quelconque des revendications précédentes, caractérisé par le fait que les secteurs (8) se situent en face des goujures (5) de la partie conique coupante (3) et les secteurs (9) se situent en face des parties pleines (5') de cette partie coupante (3).

4. Taraud selon l'une quelconque des revendications précédentes, caractérisé par le fait que ladite partie arrière (4) comporte des goujures (10) de lubrification sur une partie de sa longueur, opposée à la partie conique coupante (3).

## Claims

1. Tap composed of a conical cutting part (3) relieved on flanks of threads (6) and, if appropriate, on crests (7), provided with flutes (5) for removing the chips towards the front of or inside the tap and extended by a rear part (4) which is cylindrical or very slightly conical, with a conicity opposite to that of the conical cutting part (3), and which is threaded to the nominal diameter D and to the profile of the final hole, characterised in that the said rear part (4) has a profile consisting of an alternation of sectors of two types (8) and (9), the flanks of threads of the sectors (8) having the profile of the final hole and the flanks of threads of the sectors (9) being relieved in relation to the profile of the final hole.

2. Tap according to claim 1, characterised in that the sectors of the two types (8) and (9) are such that the crests of the threads of the sectors (8) have the nominal diameter D of the final hole, and the crests of the threads of the sectors (9) are relieved in relation to the nominal diameter D of the final hole.

3. Tap according to either one of the preceding claims, characterised in that the sectors (8) are located opposite the flutes (5) of the conical cutting part (3), and the sectors (9) are located opposite the solid parts (5') of this cutting part (3).

4. Tap according to any one of the preceding claims, characterised in that the said rear part (4) possesses lubricating flutes (10) over a part of its length opposite the conical cutting part (3).

## Ansprüche

1. Gewindebohrer, der aus einem konischen Schneidabschnittt (3) besteht, der auf Gewindeflanken (6) und gegebenenfalls auf Spitzen (7) hinterschnitten ist und mit Spannuten (5) versehen ist, um die Späne nach vorne oder in das Innere des Gewindebohrers zu treiben, welcher Abschnittt (3) von einem hinteren Abschnitt (4) verlängert wird, der zylindrisch oder sehr leicht konisch ausgebildet ist und dessen Konizität umgekehrt in bezug auf die Konizität des konischen Schneidabschnittes (3) ist, dessen Gewinde einen Nenndurchmesser D aufweist und dessen Profil jenem des endgültigen Loches entspricht, dadurch gekennzeichnet, daß der hintere Abschnittt (4) ein Profil aufweist, das aus einer Wechselfolge von Sektoren von zwei Typen (8) und (9) besteht, wobei die Flanken der Gewinde der Sektoren (8) sich am Profil des endgültigen Loches befinden und die Flanken der Gewinde der Sektoren (9) in bezug auf das Profil des endgültigen Loches hinterschnitten sind.

2. Gewindebohrer nach Anspruch 1, dadurch gekennzeichnet, daß die Sektoren der beiden Typen (8) and (9) so ausgebildet sind, daß sich die Scheitelpunkte der Gewinde der Sektoren (8) am Nenndurchmesser D des endgültigen Loches befinden und die Scheitelpunkte der Gewinde der Sektoren (9) in bezug auf den Nenndurchmesser D des endgültigen Loches hinterschnitten sind.

3. Gewindebohrer nach einem der vorhergehenden Ansprüche, dadurch gekennzeichnet, daß die Sektoren (8) gegenüber den Spannuten (5) des konischen Schneidabschnittes (3) und die Sektoren (9) gegenüber den vollwandigen bzw. massiven Abschnitten (5') dieses Schneidabschnittes (3) gelegen sind.

4. Gewindebohrer nach einem der vorhergehenden Ansprüche, dadurch gekennzeichnet, daß der hintere Abschnitt (4) mit Schmierspannuten (10) auf einem Abschnitt seiner Länge versehen ist, welcher dem konischen Schneidabschnitt (3) gegenüberliegt.

Fig 1

10

1

4

9

3

8

2

5

6

7

Fig 5

8″ 8 8′

9′

D

9

9″

D

Fig 4

9 8 9

8

D

9

8

9

9 8

8

9 9

# Fig 2.

# Fig 3

Fig 6

Fig 7